# EUROPÄISCHE PATENTSCHRIFT

(11) **EP 1 369 329 B1**
(45) Veröffentlichungstag und Bekanntmachung des Hinweises auf die Patenterteilung: **09.02.2005**
(21) Anmeldenummer: 03009453.6
(22) Anmeldetag: 25.04.2003
(51) Int. Cl.: B60T 15/04

(54) **Betätigungsvorrichtung für ein Bremsgerät**
Device for operating a braking device
Dispositif d'actionnement d'un dispositif de freinage

(30) Priorität: 05.06.2002 DE 10224805
(43) Veröffentlichungstag der Anmeldung: 10.12.2003
(73) Patentinhaber: WABCO GmbH & CO. OHG, 30432 Hannover (DE)
(72) Erfinder: Christoffers, Bernd, 30974 Wennigsen (DE); Leske, Olaf, 30851 Langenhagen (DE)
(74) Vertreter: Schrödter, Manfred

(56) Entgegenhaltungen:
- EP-A- 1 042 148
- DE-A- 3 841 749
- DE-A- 4 232 492
- DE-A- 4 417 184
- DE-A- 19 653 264
- DE-A- 19 701 069
- DE-A- 19 835 574

## Beschreibung

Die Erfindung betrifft eine Betätigungsvorrichtung für ein Bremsgerät gemäß Oberbegriff des Anspruchs 1. Eine Betätigungsvorrichtung dieser gattung ist aus dem Dokument DE-A-42 32 492 bekannt geworden.

Moderne elektronische Bremssysteme (EBS-Systeme) für Fahrzeuge weisen einen einkreisigen, rein pneumatisch arbeitenden und einen elektro-pneumatischen Kreis auf. Der elektro-pneumatische Teil umfasst u. a. ein zentrales elektronisches Steuergerät und einen Bremswertgeber mit integriertem als Wegsensor ausgebildeten Sollwert-Sensor, Bremsschalter und Proportional-Relaisventil. Der Bremswertgeber ist mechanisch mit einem Bremspedal und elektrisch mit dem elektronischen Steuergerät verbunden und umfasst einen mechanisch mit dem Bremspedal verbundenen Stößel, welcher axial innerhalb eines ortsfest angeordneten Gehäuses verschiebbar angeordnet ist. Der Stößel betätigt einen Kolben über ein einen Leerhub realisierendes Bauteil und eine Feder, die sich am Kolben und an diesem Bauteil abstützt. Der Leerhub von ca. 2 mm ist vorgesehen, damit der Fahrer beim Betätigen etwas Spiel hat und nicht gleich die Bremse betätigt. Zur Übermittlung der Stößelbewegung an das elektronische Steuergerät dient der Wegsensor, welcher ein fest im Gehäuse angeordnetes Teil und einen mit dem Stößel in axialer Richtung bewegbaren Schieber aufweist, der in eine Aufnahme des Stößels eingreift. Probleme bereiten die reibungsarme Führung des Stößels und des den Leerhub realisierenden Bauteils. Durch die Bremspedalbetätigung wird nicht nur eine Kraft in axialer Richtung sondern auch ein Drehmoment auf den Stößel übertragen, das eine Verdrehung des Stößels um seine Längsachse bewirkt, insbesondere wenn die mechanische Verbindung mit dem Bremspedal über ein Kugelgelenk erfolgt. Hierdurch besteht die Gefahr, dass der Schieber des Wegsensors aus seiner Aufnahme im Stößel herausrutscht oder beschädigt wird und somit eine Wegsensierung nicht oder nur fehlerhaft möglich ist.

Die Aufgabe der vorliegenden Erfindung besteht deshalb darin, ein Betätigungsvorrichtung der eingangs genannten Art so auszubilden, dass mit einfachen Mitteln die bewegten Teile einwandfrei reibungsarm geführt werden und ein auf den Stößel wirkendes Drehmoment kompensiert wird.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schafft einen einzigen, mit dem Stößel formschlüssig verbindbaren Führungsring, der in Zusammenwirken mit zugeordneten Ausbildungen am Stößel und dem als Distanzring ausgebildeten Bauteil zur Realisierung eines Leerhubes den Stößel im Gehäuse und den Distanzring innen axial führt und gleichzeitig die Gefahr einer Verdrehung des Stößels um seine Längsachse beseitigt und eine einwandfreie Anlenkung des Wegsensor-Schiebers an den Stößel gewährleistet. Sämtliche gewünschten Funktionen werden durch die Erfindung mit nur einem einzigen Bauteil realisiert, was die Kosten und den Aufwand für die Herstellung und die Montage verringert und die Toleranzketten verkleinert. Der Aufbau des Stößels kann vereinfacht werden.

Die Erfindung soll nachfolgend anhand der beigefügten Zeichnung, in der ein Ausführungsbeispiel dargestellt ist, näher erläutert werden.

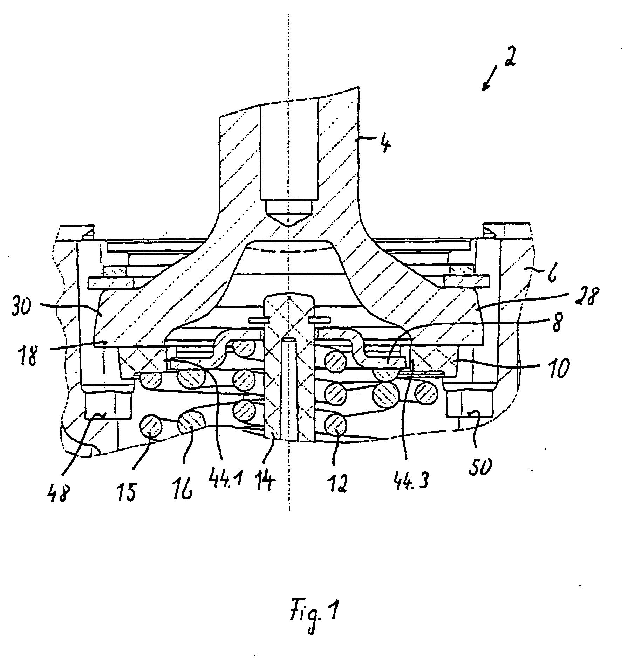

Es zeigt
- Fig. 1: einen ersten Schnitt durch einen Teil einer erfindungsgemäßen Betätigungsvorrichtung für ein Bremsgerät,

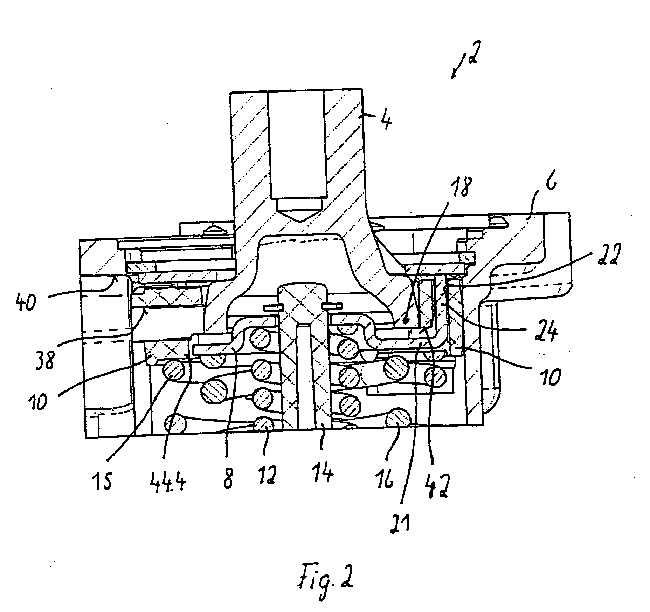

- Fig. 2: einen zweiten Schnitt durch das Teil nach Fig. 1,

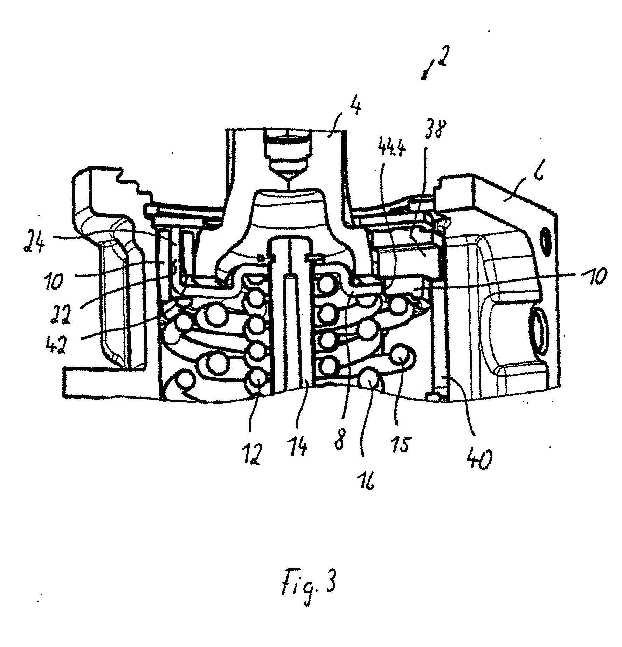

- Fig. 3: einen gedrehten Schnitt (3D-Ansicht) des Teils nach den Fig. 1 und 2,

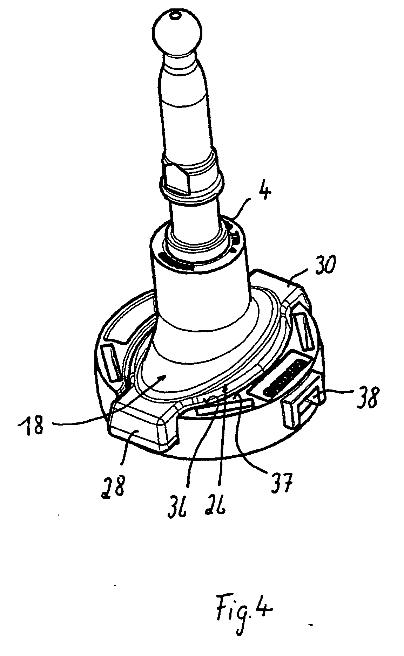

- Fig. 4: einen bei der erfindungsgemäßen Betätigungsvorrichtung vorgesehenen Stößel mit Führungsring in perspektivischer Draufsicht,

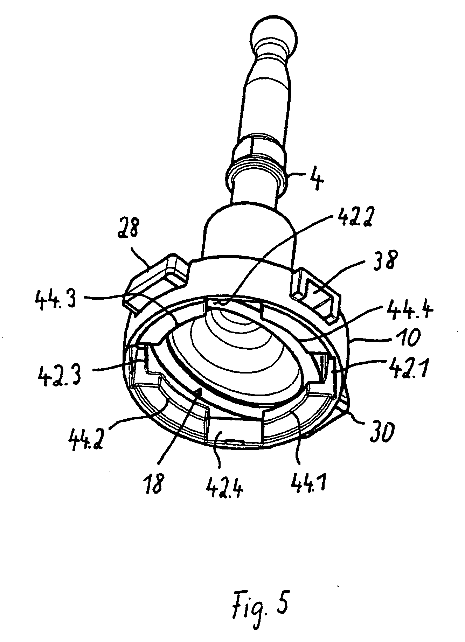

- Fig. 5: den Stößel mit Führungsring nach Fig. 4 in perspektivischer Unteransicht,

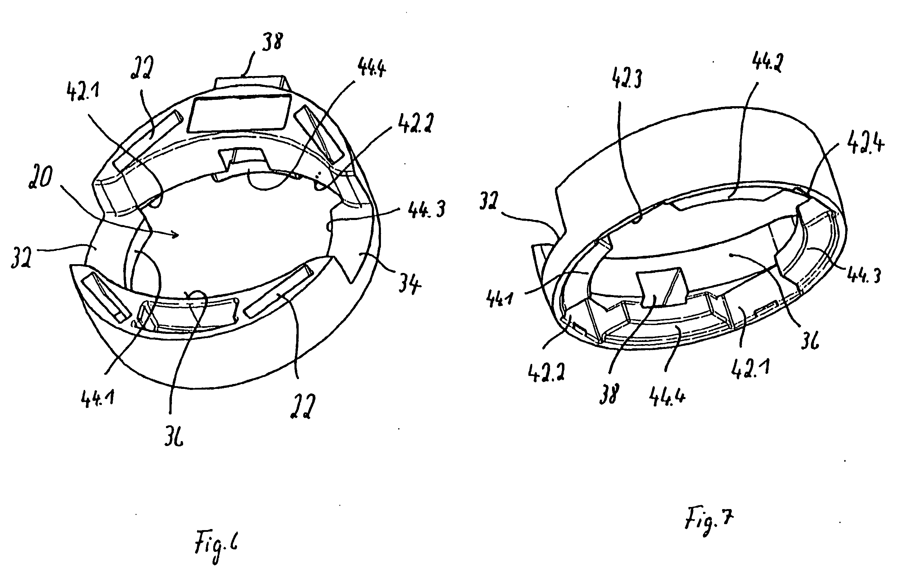

- Fig. 6: eine perspektivische Draufsicht auf den bei der Betätigungsvorrichtung verwendeten erfindungsgemäßen Führungsring und
- Fig. 7: den Führungsring nach Fig. 4 in einer perspektivischen Unteransicht.

Gleiche und einander entsprechende Bauteile sind in den Figuren der Zeichnung mit den gleichen Bezugszeichen versehen.

Die Zeichnung zeigt einen Teil einer Betätigungsvorrichtung für ein Bremsgerät 2 mit einem Stößel 4, welcher in einem Gehäuse 6 axial verschiebbar ist und von einem Bremspedal über eine mechanische Verbindung betätigbar ist (nicht dargestellt), mit einem Distanzring 8, welcher innerhalb eines Führungsringes 10 axial verschiebbar ist, welcher in formschlüssiger Verbindung mit dem Stößel steht, und mit einem vom Stößel über den Distanzring 8 und eine Abstufungsfeder 12 axial bewegbaren Kolben 14. Die Abstufungsfeder 12 stützt sich am Kolben 14 und am Distanzring 8 ab. Das Bezugszeichen 15 bezeichnet eine äußere Rückstellfeder, die sich am Führungsring 10 und einem gehäusefesten Anschlag (nicht dargestellt) abstützt. Das Bezugszeichen 16 bezeichnet eine Feelingfeder, die sich einerseits am Distanzring 8 und andererseits an einem gehäusefesten Anschlag (nicht dargestellt) abstützt.

Der Stößel 4 weist kolbenseitig eine längliche Grundplatte 18 auf, die in eine komplementär dazu ausgebildete Aufnahme 20 des Führungsringes 10 eingesetzt ist. Im Führungsring 10 sind mehrere beabstandete Langlöcher 22 ausgebildet, die sich in axialer Richtung erstrecken. Der Distanzring 8 weist mehrere abgewinkelte in der Zeichnung nach oben zeigende Abwinklungen 24 auf, die den Langlöchern 22 zugeordnet sind, in diese hineinragen und der Führung des Distanzringes im Führungsring dienen.

Die Grundplatte 18 weist einen mittleren ovalen Plattenteil 26 auf, der in Richtung der Oval-Hauptachse zwei einander gegenüberliegende rechteckförmige abstehende Arme 28, 30 aufweist, die in nutartigen Ausnehmungen 32, 34 des Führungsringes 10 angeordnet sind und den Führungsring 10 in radialer Richtung überragen. Die Innenkontur 36 des Führungsringes 10 entspricht der Außenkontur 37 des mittleren ovalen Plattenteiles 26 der Grundplatte 18.

Die Innenkontur 36 des Führungsringes 10 und damit die Außenkontur 37 der Grundplatte 18 des Stößels 4 können außer oval auch kreisförmig, unrund oder mehreckig ausgebildet sein.

Der Führungsring 10 weist quer zur Hauptachse des Ovals der Innenkontur 36, in der Zeichnung in Richtung der Nebenachse des Ovals, ein radial ausgerichtetes rechteckförmiges Fenster 38 auf, das radial nach außen vorsteht, und zwar vorzugsweise, wie dargestellt, mit einem oberen Rahmenteil und seitlichen Rahmenteilen. Im montierten Zustand der Betätigungseinrichtung ragt das Fenster 38 in einen Führungsschlitz 40 des Gehäuses 6 hinein. Der Führungsschlitz 40 dient der Aufnahme und Führung eines Wegsensor-Schiebers (nicht dargestellt), dessen Ende vom Fenster 38 aufgenommen ist und der somit der Bewegung des Stößels 4 folgt.

Die Langlöcher 22 des Führungsringes 10 befinden sich diagonal in den Winkelbereichen zwischen Haupt- und Nebenachse des Ovals der Innenkontur 36, vorliegend zwischen dem Fenster 38 und den nutartigen Ausnehmungen 32, 34 und den diagonal gegenüberliegenden Bereichen des Führungsringes 10.

Die Innenkontur 36 des Führungsringes 10 weist im Bereich der Langlöcher 22 auf der dem Distanzring 8 zugewandten Unterseite stufige Ausnehmungen 42.1, 42.2, 42.3, 42.4 auf, die sich bis zu den Langlöchern erstrecken und deren Länge gleich der Länge der Langlöcher ist. Zwischen diesen Ausnehmungen bleiben Kreissegmente 44.1, 44.2, 44.3, und 44.4 stehen, und zwar im Bereich der nutförmigen Ausnehmungen 32, 34, des Fensters 38 und diagonal gegenüber dem Fenster. An diesen Kreissegmenten liegt die Rückstellfeder 15 an. Der Distanzring 8 liegt innerhalb der Kreissegmente 44 und weist seitliche Arme 21 auf, die jeweils am Ende mit der schon erwähnten Abwinklung 24 versehen sind. Die Arme 21 ragen in die stufigen Ausnehmungen 42 und die Abwinklungen 24 in die Langlöcher 22 des Führungsringes 10.

Im Gehäuse 6 sind Anschläge 48, 50 für die Arme 28, 30 der Grundplatte 18 des Stößels 4 ausgebildet, die größere Kräfte bei der Betätigung der Bremse abfangen sollen.

Durch die beschriebene Ausbildung und Anordnung des Führungsringes 10, des Stößels 4 und des Distanzringes 8 ist zum einen sicher gestellt, dass der Führungsring den Stößel außen gegenüber dem Gehäuse 6 und den Distanzring 8 mit dessen Armen 21 und Abwinklungen 24 in den Langlöchern 22 führt. Das Fenster 34 sichert den Stößel 4 gegen Verdrehen und sorgt dadurch für eine störungsfreie Anlenkung des Wegsensor-Schiebers an den Stößel.

## Patentansprüche

1. Betätigungsvorrichtung für ein Bremsgerät mit
- einem Stößel, der axial verschiebbar in einem Gehäuse des Bremsgerätes angeordnet ist und mechanisch mit einem Bremspedal verbunden ist,
- einem vom Stößel betätigbaren Kolben zur Ansteuerung eines Bremsventils,
- einem einen geringen Leerhub realisierenden, vom Stößel beaufschlagbaren Bauteil und
- einem mit dem Stößel und durch den Stößel bewegbaren Wegsensor-Schieber zur Erfassung der Axialbewegung des Stößels,
**gekennzeichnet durch** folgende Merkmale:
- der Stößel (4) weist an seinem dem Kolben (14) zugewandten Ende eine Grundplatte (18) auf,
- die Grundplatte (18) ist drehfest in einer Aufnahme (20) eines Führungsringes (10) angeordnet,
- der Führungsring (10) ist drehfest im Gehäuse (6) geführt,
- der Führungsring (10) weist beabstandete, in axialer Richtung verlaufende Langlöcher (22) auf,
- das den Leerhub realisierende Bauteil ist ein Distanzring (8), welcher im Führungsring (10) angeordnet und geführt ist,
- der Distanzring (8) weist zur Führung im Führungsring an seinem Außenumfang den Langlöchern (22) des Führungsringes (10) zugeordnete und in die Langlöcher ragende Abwinklungen (24) auf,
- der Führungsring (10) weist ein radial nach außen vorstehendes Fenster (38) auf zur Aufnahme des Wegsensor-Schiebers und
- das Fenster (38) des Führungsringes (10) ragt in einen im Gehäuse (6) ausgebildeten Führungsschlitz (40) für den Wegsensor-Schieber hinein, dessen Ende vom Fenster aufgenommen ist und der der Stößelbewegung folgt.

2. Betätigungsvorrichtung nach Anspruch 1, **dadurch gekennzeichnet, dass** die Grundplatte (18) eine komplementär zur Innenkontur (36) der Aufnahme (20) des Führungsringes (10) ausgebildete Außenkontur (37) aufweist.

3. Betätigungsvorrichtung nach Anspruch 2, **dadurch gekennzeichnet, dass** die Außenkontur (37) der Grundplatte (18) und entsprechend die Innenkontur (36) des Führungsringes (10) oval, kreisförmig, unrund oder mehreckig ausgebildet ist.

4. Betätigungsvorrichtung nach Anspruch 3, **dadurch gakennzeichnet,** dass die Grundplatte (18) zwei diametral gegenüber angeordnete, radial wegstrebende Arme (28, 30) aufweist, die in nutartige Ausnehmungen (32, 34) des Führungsringes (10) eingreifen.

5. Betätigungsvorrichtung nach Anspruch 4, **dadurch gekennzeichnet, dass** die Arme (28, 30) den Führungsring (10) in radialer Richtung nach außen überragen.

6. Betätigungsvorrichtung nach Anspruch 5, **dadurch gekennzeichnet, dass** im Gehäuse (6) Anschläge (48, 50) für die Arme (28, 30) der Grundplatte (18) des Stößels (4) vorgesehen sind.

7. Betätigungsvorrichtung nach einem der vorhergehenden Ansprüche, **dadurch gekennzeichnet, dass** der Führungsring (10) im Bereich der Langlöcher (22) auf der dem Distanzring (8) zugewandten Unterseite stufige Ausnehmungen (42.1, 42.2, 42.3, 42.4) aufweist, die sich bis zu den Langlöchern (22) erstrecken und zwischen denen kreissegmentförmige Vorsprünge (44.1, 44.2, 44.3, 44.4) verbleiben.

8. Betätigungsvorrichtung nach Anspruch 7, **dadurch gekennzeichnet, dass** der Distanzring (8) im Führungsring (10) innerhalb der kreissegmentförmigen Vorsprünge (44) angeordnet ist.

9. Betätigungsvorrichtung nach Anspruch 8, **dadurch gekennzeichnet, dass** der Distanzring (8) an seinem Außenumfang seitliche Arme (21) aufweist, die jeweils am Ende mit einer Abwinklung (24) versehen sind, wobei die Arme (21) in die stufigen Ausnehmungen (42) und die Abwinklungen (24) in die Langlöcher (22) des Führungsringes (10) hineinragen.

10. Betätigungsvorrichtung nach einem der vorhergehenden Ansprüche, **dadurch gekennzeichnet, dass** der Führungsring (10) aus Kunststoff besteht.

## Claims

1. Operating device for a brake apparatus, having
- a plunger that is axially displaceable in a housing of the brake apparatus and is mechanically connected to a brake pedal,
- a piston operable by the plunger for control of a brake valve,
- a component performing a slight idle stroke action, on which component the plunger is capable of acting, and
- a displacement sensor slider movable with the plunger and by the plunger for detecting the axial movement of the plunger,
**characterised by** the following features:
- at its end facing the piston (14) the plunger (4) comprises a base plate (18),
- the base plate (18) is non-rotatably arranged in a seat (20) of a guide ring (10),
- the guide ring (10) is non-rotatably guided in the housing (6),
- the guide ring (10) has spaced, axially extending slots (22),
- the component performing the idle stroke action is a spacer ring (8), which is arranged and guided in the guide ring (10),
- for guidance in the guide ring the spacer ring (8) has at its outer circumference angled members (24) associated with the slots (22) of the guide ring (10) and projecting into the slots,
- the guide ring (10) has a radially outwardly protruding window (38) for receiving the displacement sensor slider, and
- the window (38) of the guide ring (10) projects into a guide slot (40), formed in the housing (6), for the displacement sensor slider, the end of which is received by the window and which follows the plunger movement.

2. Operating device according to claim 1, **characterised in that** the base plate (18) has an outer contour (37) of complementary construction to the inner contour (36) of the seat (20) of the guide ring (10).

3. Operating device according to claim 2, **characterised in that** the outer contour (37) of the base plate (18) and correspondingly the inner contour (36) of the guide ring (10) are of oval, circular, non-round or polygonal construction.

4. Operating device according to claim 3, **characterised in that** the base plate (18) has two diametrically oppositely arranged radially outwardly directed arms (28, 30), which engage in groove-like apertures (32, 34) of the guide ring (10).

5. Operating device according to claim 4, **characterised in that** the arms (28, 30) protrude beyond the guide ring (10) in a radially outward direction.

6. Operating device according to claim 5, **characterised in that** stops (48, 50) for the arms (28, 30) of the base plate (18) of the plunger (4) are provided in the housing (6).

7. Operating device according to any one of the preceding claims, **characterised in that** in the region of the slots (22) the guide ring (10) has on its underside facing the spacer ring (8) stepped apertures (42.1, 42.2, 42.3, 42.4), which extend as far as the slots (22) and between which remain projections (44.1, 44.2, 44.3, 44.4) in the form of a segment of a circle.

8. Operating device according to claim 7, **characterised in that** the spacer ring (8) is arranged in the guide ring (10) inside the projections (44) in the form of a segment of a circle.

9. Operating device according to claim 8, **characterised in that** on its outer circumference the spacer ring (8) has lateral arms (21), each of which is provided at the end with an angled portion (24), the arms (21) projecting into the stepped apertures (42) and the angled portions (24) projecting into the slots (22) of the guide ring (10).

10. Operating device according any one of the preceding claims, **characterised in that** the guide ring (10) comprises plastics material.

## Revendications

1. Dispositif d'actionnement d'un système de freinage, comportant
- un poussoir qui est agencé avec faculté de translation axiale dans un boîtier du système de freinage et qui est relié mécaniquement à une pédale de frein,
- un piston actionnable par le poussoir pour piloter une valve de freinage,
- un composant réalisant une petite course à vide et susceptible d'être sollicité par le poussoir, et
- un curseur détecteur de course mobile avec le poussoir et par le poussoir et destiné à détecter le mouvement axial du poussoir,
**caractérisé par** les éléments suivants :
- le poussoir (4) comprend à son extrémité tournée vers le piston (14) une plaque de base (18),
- la plaque de base (18) est agencée solidairement en rotation dans un logement (20) d'une bague de guidage (10),
- la bague de guidage (10) est guidée solidairement en rotation dans le boîtier (6),
- la bague de guidage (10) comprend des trous oblongs (22) écartés s'étendant en direction axiale,
- le composant réalisant la course à vide est un anneau écarteur (8) qui est agencé et guidé dans la bague de guidage (10),
- pour le guidage dans la bague de guidage, l'anneau écarteur (8) comprend à sa périphérie extérieure des coudages (24) qui sont associés aux trous oblongs (22) de la bague de guidage (10) et qui s'engagent dans les trous oblongs,
- la bague de guidage (10) comprend une fenêtre (38) faisant saillie radialement vers l'extérieur pour recevoir le curseur détecteur de course, et
- la fenêtre (38) de la bague de guidage (10) pénètre dans une fente de guidage (40) ménagée dans le boîtier (6) pour le curseur détecteur de course, dont l'extrémité est reçue par la fenêtre et qui suit le mouvement du poussoir.

2. Dispositif d'actionnement selon la revendication 1, **caractérisé en ce que** la plaque de base (18) présente un contour extérieur (37) réalisé de façon complémentaire au contour intérieur (36) du logement (20) de la bague de guidage (10).

3. Dispositif d'actionnement selon la revendication 2, **caractérisé en ce que** le contour extérieur (37) de la plaque de base (18) et en correspondance le contour intérieur (36) de la bague de guidage (10) sont réalisés en forme ovale, circulaire, non ronde ou polygonale.

4. Dispositif d'actionnement selon la revendication 3, **caractérisé en ce que** la plaque de base (18) comprend deux bras (28, 30) agencés diamétralement à l'opposé et s'écartant radialement, qui s'engagent dans des évidements (32, 34) en forme de gorge de la bague de guidage (10).

5. Dispositif d'actionnement selon la revendication 4, **caractérisé en ce que** les bras (28, 30) dépassent radialement vers l'extérieur au-delà de la bague de guidage (10).

6. Dispositif d'actionnement selon la revendication 5, **caractérisé en ce que** des butées (48, 50) pour les bras (28, 30) de la plaque de base (18) du poussoir (4) sont prévues dans le boîtier (6).

7. Dispositif d'actionnement selon l'une des revendications précédentes, **caractérisé en ce que** la bague de guidage (10) présente, dans la zone des trous oblongs (22), sur la face inférieure tournée vers l'anneau écarteur (8), des évidements en gradins (42.1, 42.2, 42.3, 42,4) qui s'étendent jusqu'aux trous oblongs (22) et entre lesquels subsistent des saillies (44.1, 44.2, 44.3, 44.4) en forme de segment circulaire.

8. Dispositif d'actionnement selon la revendication 7, **caractérisé en ce que** l'anneau écarteur (8) est agencé dans la bague de guidage (10) à l'intérieur des saillies (44) en forme de segment circulaire.

9. Dispositif d'actionnement selon la revendication 8, **caractérisé en ce que** l'anneau écarteur (8) présente des bras latéraux (21) à sa périphérie extérieure, qui sont pourvus chacun d'un coudage (24) à l'extrémité, les bras (21) pénétrant dans les évidements en gradins (42) et les coudages (24) pénétrant dans les trous oblongs (22) de la bague de guidage (10).

10. Dispositif d'actionnement selon l'une des revendications précédentes, **caractérisé en ce que** la bague de guidage (10) est constituée en matière plastique.
